# EUROPÄISCHE PATENTSCHRIFT

(11) **EP 0 985 591 B1**
(45) Veröffentlichungstag und Bekanntmachung des Hinweises auf die Patenterteilung: **14.01.2004**
(21) Anmeldenummer: 99115807.2
(22) Anmeldetag: 11.08.1999
(51) Int. Cl.: B62D 5/06, B62D 5/30

(54) **Lenksystem für nicht spurgebundene Kraftfahrzeuge**
Steering system for non track-bound motor vehicles
Système de direction pour automobiles non guidées

(30) Priorität: 09.09.1998 DE 19841101
(43) Veröffentlichungstag der Anmeldung: 15.03.2000
(73) Patentinhaber: DaimlerChrysler AG, 70567 Stuttgart (DE)
(72) Erfinder: Bohner, Hubert, 71032 Böblingen (DE); Moser, Martin, 70736 Fellbach (DE); Schneckenburger, Reinhold, 71277 Rutesheim (DE)

(56) Entgegenhaltungen:
- DE-C- 19 540 956
- DE-C- 19 546 733
- DE-C- 19 755 044
- DE-C- 19 805 015

## Beschreibung

Die Erfindung betrifft ein Lenksystem für nicht spurgebundene Kraftfahrzeuge, mit einer vom Fahrer betätigten Lenkhandhabe, z.B. Lenkhandrad, einem Lenkstellantrieb zur Lenkverstellung lenkbarer Fahrzeugräder, einem mit der Lenkhandhabe betätigbaren Lenkwinkel-Sollwertgeber, einem mit den lenkbaren Fahrzeugrädern betätigbaren Lenkwinkel-Istwertgeber, einer den Lenkstellantrieb in Abhängigkeit von einem Vergleich der Soll- und Istwerte des Lenkwinkels steuernden und sich sowie mit ihr zusammenwirkende Sensorik ständig auf Fehlfunktion überprüfenden Regelanordnung und einer zwischen der Lenkhandhabe und den lenkbaren Fahrzeugrädern angeordneten mechanischen oder hydraulischen Zwangskopplung, welche bei korrekt arbeitender Regelanordnung geöffnet wird bzw. offen bleibt (unwirksamer Normalzustand) und bei fehlerhafter Regelanordnung automatisch geschlossen wird (wirksamer Sonderzustand), wobei die wirksam geschalteke Zwangskopplung eine vorgegebene Elastizität aufweist und bei wirksamer Zwangskopplung zwischen Lenkhandhabe und gelenkten Fahrzeugrädern übertragbare kräfte und Momente eine Relativverstellung zwischen soll-und ist wertgeber verursachen.

Derartige Lenksysteme, die nach dem Konzept "Steer by wire" arbeiten, sind grundsätzlich bekannt (zum Beispiel aus der DE19540956C) und werden fur zukünftige Kraftfahrzeuge entwickelt. Diese Systeme bieten den grundsätzlichen Vorteil, daß sie zumindest hinsichtlich der Regelanordnung sowie der zugehörigen Sensorik ohne konstruktive Abänderungen für unterschiedlichste Fahrzeuge geeignet sind. Durch entsprechende Programmierung kann einerseits praktisch jedes Übersetzungsverhältnis zwischen dem Stellhub der Lenkhandhabe und der Lenkwinkeländerung der gelenkten Fahrzeugräder verwirklicht werden. Darüber hinaus besteht die Möglichkeit, die Regelanordnung mit zusätzlichen Sensoren zu verbinden, um vorzugebende Parameter, z.B. Seitenwindeinflüsse, selbsttätig zu berücksichtigen bzw. auszuregeln.

Um das erforderliche Maß an Sicherheit bei Systemfehlern gewährleisten zu können, ist vorgesehen, beim Auftreten eines Fehlers in der Regelanordnung bzw. beim Ausfall von Signalen, die von der Regelanordnung ausgewertet werden sollen, automatisch eine Betriebsweise für anormalen Betrieb bzw. Notfallbetrieb einzuschalten. Bei dieser Betriebsweise ist eine Zwangskopplung zwischen Lenkhandhabe und gelenkten Fahrzeugrädern vorgesehen, so daß das Lenksystem prinzipiell nach Art einer herkömmlichen Lenkung arbeitet, wobei allerdings die bei herkömmlichen Lenkungen übliche mechanische Lenksäule gegebenenfalls durch andere mechanische System oder auch durch hydraulische Systeme, insbesondere hydrostatische Systeme, ersetzt sein kann.

Aufgabe der Erfindung ist es nun, bei einem Lenksystem der eingangs angegebenen Art hinsichtlich der Betriebssicherheit des System vorteilhafte Maßnahmen aufzuzeigen.

Diese Aufgabe wird erfindungsgemäß dadurch gelöst, daß das Lenksystem im Sonderzustand (wirksame geschaltete Zwangskopplung) bei hinreichender Restfunktion von Regelanordnung und Sensorik als Servolenkung arbeitet, indem die Regelanordnung den Lenkstellantrieb analog zu Betrag und Richtung der aus den Signalen von Lenkwinkel-Sollwertgeber und Lenkwinkel-Istwertgeber erfaßbaren Relativverstellung zur Erzeugung einer Servokraft mit einer die übertragenen Kräfte bzw. Momente vermindernden Richtung steuert.

Die Erfindung beruht auf dem allgemeinen Gedanken, bei eingeschalteter Zwangskopplung die vom Fahrer aufzubringenden Handkräfte an der Lenkhandhabe nach Möglichkeit zu vermindern und dazu das Lenksystem analog einer herkömmlichen Servolenkung zu betreiben. In diesem Zusammenhang soll die Regelanordnung den Lenkstellantrieb zur Erzeugung einer die Handkräfte vermindernden Servokraft steuern. Hier nutzt die Erfindung die Tatsache aus, daß die im Notfall eingeschaltete Zwangskopplung zwischen Lenkhandhabe und gelenkten Fahrzeuggrädern aufgrund von elastischen Nachgiebigkeiten der Kopplungselemente bzw. -medien eine entsprechende elastische Nachgiebigkeit aufweisen kann, mit der Folge, daß zwischen dem lenkhandhabenseitigen Ende bzw. Eingang und dem den gelenkten Fahrzeugrädern zugeordneten Ende bzw. Ausgang der Zwangskopplung bei Übertragung von Kräften und Momenten mehr oder weniger große Relativbewegungen auftreten, die zu entsprechenden Relativverstellungen zwischen Lenkwinkelsollwertgeber und Lenkwinkelistwertgeber führen. Bei der Erfindung werden nun im Sonderzustand des Lenksystems die vorgenannten Soll- und Istwertgeber zur Erfassung dieser Relativverstellungen und damit zur Erfassung der übertragenen Kräfte und Momente herangezogen.

Während also Soll- und Istwertgeber im Normalzustand des Lenksystems zur Ermittlung der Soll-Istwert-Abweichung des Lenkwinkels dienen, werden sie im Sonderzustand zur Ermittlung der zwischen Lenkhandhabe und gelenkten Fahrzeugrädern übertragenen Kräfte und Momente ausgenutzt. Aufgrund dieser Doppelfunktion von Soll- und Istwertgeber kann ohne zusätzlichen Sensoren beim Sonderbetrieb der Komfort einer herkömmlichen Servolenkung ermöglicht werden.

Es ist lediglich notwendig, die Regelanordnung so auszulegen, daß sie die unmittelbar beim Einschalten der Zwangskopplung vorliegenden relativen Lagen von Soll- und Istwertgeber erfaßt. Da unmittelbar zum Zeitpunkt des Einschaltens der Zwangskopplung noch keine Kräfte bzw. Momente zwischen gelenkten Fahrzeugrädern und Lenkhandhabe übertragen werden, ist die vorgenannte Relativlage charakteristisch für eine unverspannte Zwangskopplung.

Ein besonderer Vorzug der Erfindung liegt darin, daß die technische Ausbildung der Zwangskopplung beliebig sein kann. Denn für die Ausführbarkeit der Erfindung ist es von untergeordneter Bedeutung, ob eine Zwangskopplung über mechanische Elemente oder hydraulisch erfolgt. Im ersteren Falle wird die elastische Verformbarkeit der mechanischen Elemente ausgenutzt. Im zweiten Falle wird die elastische Nachgiebigkeit der Wandungen der Hydraulikleitungen sowie die Kompressibilität des Hydraulikmediums genutzt.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen beschrieben werden.

Dabei zeigt
- Fig. 1: eine schaltplanartige Darstellung einer ersten Ausführungsform,
- Fig. 2: eine entsprechende Darstellung einer zweiten Ausführungsform und
- Fig. 3: eine entsprechende Darstellung einer weiteren Ausführungsform der Erfindung.

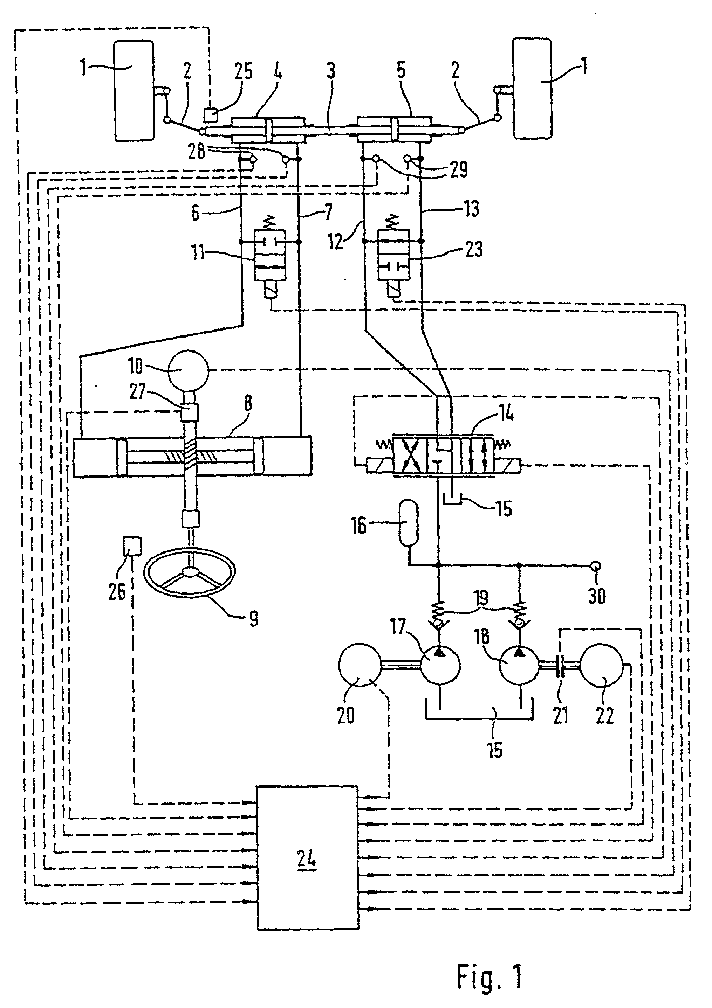

Bei dem in Fig. 1 dargestellten Beispiel besitzt ein nicht näher dargestelltes Kraftfahrzeug lenkbare Vorderräder 1, die über Spurstangen 2 sowie eine Stange 3 miteinander lenkverstellbar gekoppelt sind.

Die Stange 3 bildet die Kolbenstange von zwei parallel zueinander angeordneten Kolben-Zylinder-Aggregaten 4 und 5, die jeweils als doppeltwirkende Aggregate ausgebildet sind.

Das Kolben-Zylinder-Aggregat 4 ist über zwei Hydraulikleitungen 6 und 7 mit den beiden Kolbenarbeitsräumen eines doppeltwirkenden Kolben-Zylinder-Aggregates 8 gekoppelt, dessen Kolben mechanisch mit einem Lenkhandrad 9 zwangsgekoppelt sind. Die Kolben des Aggregates 8 verschieben sich nach rechts bzw. links, wenn das Lenkhandrad im Uhrzeigersinn bzw. entgegen dem Uhrzeigersinn gedreht wird. Bei Verschiebung der Kolben des Kolben-Zylinder-Aggregates 8 wird das Lenkhandrad entsprechend gedreht.

Im übrigen ist das Lenkhandrad 9 mit einem selbsthemmungfreien Elektromotor 10 antriebsmäßig verbunden, welcher bei festgehaltener Motorwelle als reiner Krafterzeuger zu arbeiten vermag und dessen Zweck weiter unten erläutert wird.

Zwischen den Hydraulikleitungen 6 und 7 ist ein normal geschlossenes Absperrventil 11 angeordnet, welches sich durch Bestromung seines Stellmagnetes gegen die Kraft einer Rückstellfederung aus der dargestellten Schließlage in seine offenstellung umschalten läßt und bei Abschaltung des den Stellmagnet beaufschlagenden elektrischen Stromes automatisch von der Rückstellfederung in die dargestellte Schließlage gebracht bzw. in dieser Stellung gehalten wird.

Das Kolben-Zylinder-Aggregat 5 ist über Hydraulikleitungen 12 und 13 mit zwei Anschlüssen eines Steuerventiles 14 verbunden, welches über zwei weitere Anschlüsse mit einem relativ drucklosen Hydraulikreservoir 15 und einer hydraulischen Druckquelle, im dargestellten Beispiel ein hydraulischer Druckspeicher 16 sowie Pumpen 17 und 18, verbunden ist. Der Druckspeicher 16 kann mittels der Pumpe 17 bzw. einer weiteren Pumpe 18 nachgeladen werden. Beide Pumpen 17 und 18 sind durch Rückschlagventile 19 gegen Rückschlag von der Druck- zu ihrer Saugseite gesichert und saugseitig an das Reservoir 15 angeschlossen. Die Pumpe 17 wird von einem Elektromotor 20 angetrieben. Die Pumpe 18 ist über eine schaltbare Kupplung 21 mit dem Motor 22 des Kraftfahrzeuges verbindbar.

Zwischen den Hydraulikleitungen 12 und 13 ist ein normal offenes Absperrventil 23 angeordnet, welches durch elektrische Bestromung seines Stellmagnetes gegen die Kraft einer Rückstellfederung aus der dargestellten Offfenlage in seine Schließlage gebracht bzw. in dieser Schließlage gehalten werden kann.

Eine elektronische Regel- und Steueranordnung 24 ist eingangsseitig mit einem Geber 25 für den Istwert des Lenkwinkels der Vorderräder 1 verbunden. Dieser Geber 25 kann beispielsweise mit der Stange 3 zusammenwirken, die bei Lenkverstellung der Räder 1 einen zum Lenkwinkel analogen Stellhub ausführt.

Außerdem ist die Eingangsseite der Regel- und Steueranordnung 24 mit einem vom Lenkhandrad 9 betätigten Geber 26 für den Sollwert des Lenkwinkels verbunden.

Darüber hinaus ist die Eingangsseite der Regel- und Steueranordnung mit einem Drehmoment-Sensor 27 verbunden, welcher die zwischen Lenkhandrad 9 sowie Elektromotor 10 übertragenen Kräfte bzw. Momente erfaßt.

Schließlich ist an die Eingangsseite der Regel- und Steueranordnung 24 eine Vielzahl von Drucksensoren 28, 29 und 30 angeschlossen, deren Signale die hydraulischen Drücke in den Hydraulikleitungen 6 und 7 bzw. 12 und 13 bzw. den Druck am Druckeingang des Steuerventiles 14 wiedergeben.

Ausgangsseitig ist die Regel- und Steueranordnung 24 mit den Stellmagneten der Absperrventile 11 und 23 sowie des Steuerventiles 14 verbunden. Darüber hinaus werden vom Ausgang der Regel- und Steueranordnung die Elektromotoren 10 und 20 sowie die Kupplung 21 gesteuert.

Das Lenksystem der Fig. 1 funktioniert wie folgt:

Bei normalem Betrieb werden die Umschaltventile 11 und 23 von der Regel- und Steueranordnung 24 durch Bestromung der den vorgenannten Ventilen 11 und 23 zugeordneten Stellmagnete in die nicht dargestellten Lagen gebracht und in diesen Lagen gehalten. Dementsprechend ist das Kolben-Zylinder-Aggregat 4 vom Kolben-Zylinder-Aggregat 8 sowie vom Lenkhandrad 9 hydraulisch entkoppelt.

Andererseits wird die Druckdifferenz zwischen den beiden Kolbenarbeitsräumen des Kolben-Zylinder-Aggregates 5 durch Betätigung des Steuerventiles 14 gesteuert, und zwar in der nachfolgend dargestellten Weise:

Die Regel- und Steueranordnung 24 erfaßt über den Geber 25 den Istwert des Lenkwinkels der Vorderräder 1. Über den vom Lenkhandrad betätigten Geber 26 erhält die Regel- und Steueranordnung 24 den Sollwert des Lenkwinkels. Entsprechend einem von Regel- und Steueranordnung 24 ausgeführten Soll-Istwert-Vergleich werden dann die Stellmagnete des Steuerventiles 14 gesteuert. Wenn keine Soll-Istwert-Abweichung vorhanden ist, bleibt das Steuerventil 14 in der dargestellten Mittellage, in der das Kolben-Zylinder-Aggregat 5 hydraulisch auf Freilauf geschaltet und mit dem Reservoir 15 verbunden ist, während der Druckspeicher 16, welcher in Abhängigkeit vom Signal des Drucksensors 30 über die Pumpe 17 bzw. 18, soweit erforderlich, ständig nachgeladen wird, gegenüber dem Kolben-Zylinder-Aggregat 5 abgesperrt ist. Falls eine Soll-Istwert-Abweichung auftritt, wird das Steuerventil 14 aus der dargestellten Mittellage je nach Richtungssinn der Soll-Istwert-Abweichung nach rechts oder links verschoben, so daß jeweils ein Kolbenarbeitsraum des Kolben-Zylinder-Aggregates 5 mit dem Druckanschluß des Steuerventiles 14 und der andere Kolbenarbeitsraum des Aggregates 5 mit dem Reservoir 15 steuerbar verbunden und am Kolben-Zylinder-Aggregat 5 eine steuerbare Druckdifferenz wirksam wird, mit der Folge, daß das Kolben-Zylinder-Aggregat 5 eine Stellkraft in einer von der Richtung der Soll-Istwert-Abweichung des Lenkwinkels vorgegebenen Richtung erzeugt. Auf diese Weise wird eine Soll-Istwert-Abweichung des Lenkwinkels kurzfristig ausgeregelt, und die Vorderräder 1 folgen der Lenkverstellung des Lenkhandrades 9.

Aus den Signalen der Drucksensoren 29 und/oder aus den elektrischen Spannungen und Stromstärken an den Stellmagneten des Steuerventiles 14 kann die Regler- und Steueranordnung 24 die am Kolben-Zylinder-Aggregat 5 wirksame Druckdifferenz direkt oder indirekt ermitteln, deren Maß mit den zwischen den Lenkrädern 1 und dem Kolben-Zylinder-Aggregat 5 übertragenen Kräften bzw. Momenten korreliert ist. In Korrelation zu diesen Kräften wird von der Regel- und Steueranordnung 24 ein Sollwert für eine am Lenkhandrad 9 fühlbare Handkraft bestimmt und durch entsprechende Ansteuerung des Elektromotors 10 eingestellt, wobei der Drehmoment-Sensor 27 die zwischen Elektromotor 10 und Lenkhandrad 9 wirksamen Kräfte bzw. Momente und damit den Istwert der Handkraft erfaßt. Im Ergebnis wird also der Motor 10 in Abhängigkeit von einem Soll-Istwert-Vergleich für die Handkräfte geregelt. Auf diese Weise erhält der Fahrer am Lenkhandrad 9 eine haptische Rückkopplung der zwischen den Fahrzeuglenkrädern 1 und dem Kolben-Zylinder-Aggregat 5 wirksamen Kräfte.

Die Regel- und Steueranordnung 24 überwacht sich ständig auf korrekte Funktion. Darüber hinaus werden die Signale der mit der Eingangsseite der Regel- und Steueranordnung 24 verbundenen Geber und Sensoren 25 bis 30 ständig auf Plausibilität überprüft. Sollte ein Systemfehler festgestellt werden, wird der Stellmagnet des Absperrventiles 11 stromlos geschaltet mit der Folge, daß das Absperrventil 11 in die in Fig. 1 dargestellte Schließlage umschaltet und die Kolben-Zylinder-Aggregate 4 und 8 und damit die lenkbaren Vorderräder 1 und das Lenkhandrad 9 miteinander hydraulisch zwangsgekoppelt sind.

Soweit eine hinreichende Restfunktion der Regel- und Steueranordnung 24 sowie der damit zusammenwirkenden Sensorik gegeben ist, arbeitet das erfindungsgemäße Lenksystem bei eingeschalteter Zwangskopplung nach Art einer herkömmlichen Servolenkung. Dies bedeutet, daß die Regel- und Steueranordnung 24 das Steuerventil 14 in Abhängigkeit von den zwischen Lenkhandrad 9 und gelenkten Fahrzeugrädern 1 übertragenen Kräften und Momenten steuert, derart, daß das Kolben-Zylinder-Aggregat 5 eine die am Lenkhandrad 9 aufzubringende Handkraft vermindernde Servokraft erzeugt.

Zur Erfassung der zwischen Lenkhandrad 9 und gelenkten Fahrzeugrädern 1 übertragenen Kräfte und Momente wird im Beispiel der Fig. 1 die Elastizität der hydraulischen Kopplung zwischen den Kolben-Zylinder-Aggregaten 4 und 8 ausgenutzt. Aufgrund der Kompressibilität des hydraulischen Mediums sowie der elastischen Nachgiebigkeit der Wandungen der Hydraulikleitungen 6 und 7 sowie der Zylinder der Kolben-Zylinder-Aggregate 4 und 8 tritt zwischen Lenkhandrad 9 und gelenkten Fahrzeugrädern 1 eine mehr oder weniger große elastische Nachgiebigkeit auf, mit der Folge, daß zwischen Lenkhandrad 9 und gelenkten Fahrzeugrädern 1 Relativbewegungen auftreten können, die von dem Übersetzungsverhältnis der Antriebsverbindung zwischen Lenkhandrad 9 und gelenkten Fahrzeugrädern 1 abweicht.

Diese Relativbewegungen können aus den Signalen der Soll- und Istwertgeber 25 und 26 ermittelt werden, wenn die Regel- und Steueranordnung 24 die relativen Lagen der beiden Sensoren 25 und 26 beim Einschalten der hydraulischen Zwangskopplung zwischen Lenkhandrad 9 und gelenkten Fahrzeugrädern 1 "kennt"; zum Zeitpunkt des Einschaltens der Zangskopplung liegt ein praktisch kräftefreier Zustand der Zwangskopplung vor. Aufgrund des konstruktiv vorgegebenen Übersetzungsverhältnisses zwischen Drehbewegungen des Lenkhandrades 9 und Lenkbewegungen der Räder 1 kann dann die Regel- und Steueranordnung für jede aus den Signalen des Sensors 26 erfaßte Drehstellung des Lenkhandrades 9 eine zu erwartende Lenkstellung der gelenkten Fahrzeugräder 1 bzw. ein dementsprechend zu erwartendes Signal des Sensors 25 ermitteln. Wenn dann das tatsächlich Signal des Sensors 25 in der einen oder anderen Richtung von dem zu erwartenden Signal abweicht, ist dies gleichbedeutend damit, daß zwischen Lenkhandrad 9 und gelenkten Fahrzeugrädern 1 eine entsprechende Kraft bzw. ein entsprechendes Moment in der einen oder anderen Richtung übertragen wird. Somit kann dann die Regel- und Steueranordnung 24 durch entsprechende Verstellung des Steuerventiles 14 das Kolben-Zylinder-Aggregat 5 hydraulisch derart ansteuern, daß dieses Aggregat 5 eine das jeweilige Lenkmanövers des Fahrers unterstützende Servokraft erzeugt.

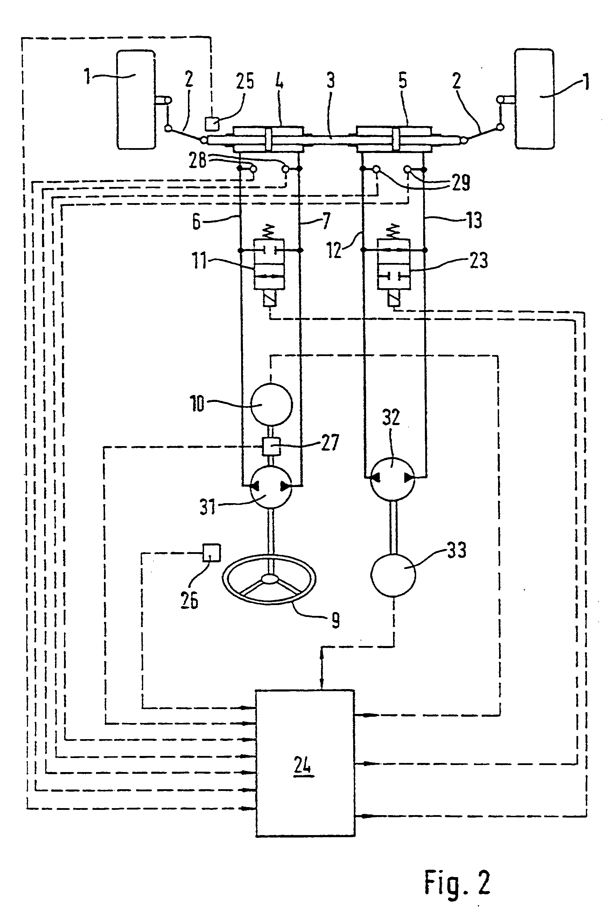

Die in Fig. 2 dargestellte Ausführungsform unterscheidet sich von der Anordnung nach Fig. 1 im wesentlichen dadurch, daß das Kolben-Zylinder-Aggregat 6 durch eine hydrostatische, reversierbare Pumpe 31 ersetzt ist, mit der Hydraulikmedium zwischen den Hydraulikleitungen 6 und 7 ausgetauscht werden kann. Diese Pumpe 31 ist einerseits mit dem Elektromotor 10 und andererseits mit dem Lenkhandrad 9 antriebsmäßig zwangsgekoppelt.

Außerdem kann eine weitere reversierbare und vorzugsweise ebenfalls hydrostatische Pumpe 32 die Hydraulikleitungen 12 und 13 verbinden. Zum Antrieb dieser Pumpe dient ein Elektromotor 33, welcher von der Regel- und Steueranordnung 24 betätigt wird.

Die Funktionsweise der Ausführungsform der Fig. 2 stimmt mit der Funktionsweise der Ausführungsform nach Fig. 1 weitestgehend überein.

Wenn das Umschaltventil 11 seine Schließlage einnimmt, sind die hydrostatische Pumpe 31 und das Kolben-Zylinder-Aggregat 4 und damit die lenkbaren Fahrzeugräder 1 und das Lenkhandrad 9 miteinander zwangsgekoppelt.

Diese Zwangskopplung wird dann vorgenommen, wenn die Regelund Steueranordnung 24 eine Fehlfunktion im Lenksystem feststellen sollte. Soweit in einem solchen Falle eine Fehlfunktion an Teilen des hydraulischen Systems des Kolben-Zylinder-Aggregates 5 vorliegt oder als möglich erscheint, wird automatisch die Stromversorgung des Magnetes des Umschaltventiles 23 abgeschaltet, so daß das Umschaltventil 23 in die in Fig. 2 dargestellte Offenlage umschaltet und das Kolben-Zylinder-Aggregat 5 unter allen Umständen hydraulisch auf Freilauf geschaltet ist.

Bei Normalbetrieb, d.h. wenn die Regel- und Steueranordnung 24 keinerlei Fehlfunktion erkennt, werden die Umschaltventile 11 und 23 von der Regel- und Steueranordnung 23 jeweils in ihren in Fig. 2 nicht gezeigten Stellungen gehalten. Der Elektromotor 33 wird dann von der Regel- und Steueranordnung in Abhängigkeit von einem Soll-Istwert-Vergleich des Lenkwinkels, d.h. in Abhängigkeit von der Differenz zwischen den Signalen der Geber 25 und 26, in der einen oder anderen Richtung mit mehr oder weniger großer Stellkraft betrieben, so daß das Kolben-Zylinder-Aggregat 5 eine entsprechende Stellkraft auf die gelenkten Räder 1 überträgt.

Auch bei der Ausführungsform der Fig. 2 kann die Regel- und Steueranordnung 24 wiederum aus den Signalen der Sensoren 25 und 26 bei eingeschalteter Zwangskopplung von Lenkhandrad 9 und gelenkten Fahrzeugrädern die zwischen Lenkhandrad 9 und gelenkten Fahrzeugrädern 1 übertragenen Kräfte und Momente ermitteln und in Abhängigkeit davon den Elektromotor 33 derart ansteuern, daß er eine zu den vorgenannten Kräften und Momenten analoge Stellkraft erzeugt, die dann hydraulisch über die vom Elektromotor 33 angetriebene Pumpe 32 und die Hydraulikleitungen 12 und 13 auf das Kolben-Zylinder-Aggregat 5 übertragen und damit als Servokraft lenkwirksam wird.

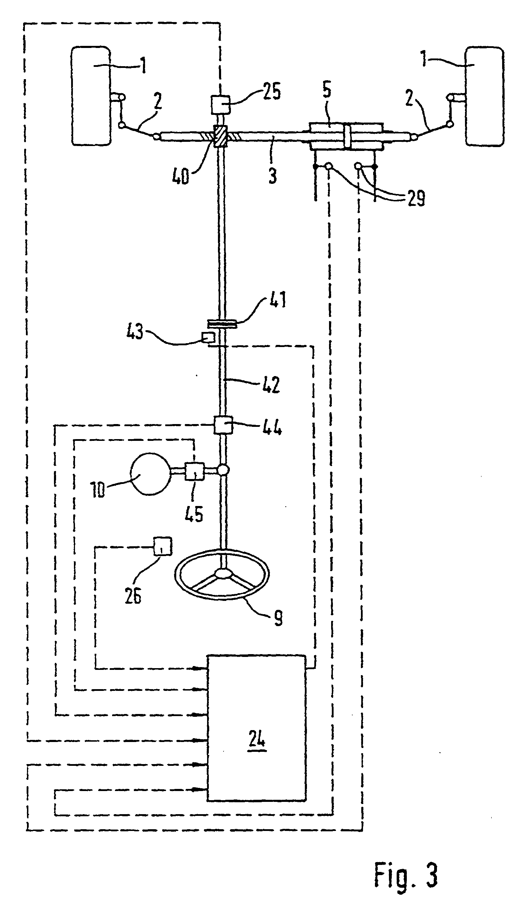

Die in Fig. 3 dargestellte Ausführungsform unterscheidet sich von den vorangehend beschriebenen Ausführungsformen zunächst dadurch, daß für den Notfall ein mechanischer Durchtrieb zwischen Lenkhandrad 9 und gelenkten Fahrzeugrädern 1 vorgesehen ist.

Im dargestellten Beispiel ist dazu die Stange 3 als Zahnstange angeordnet, welche mit einem Ritzel 40 kämmt, das seinerseits über eine durch Federung in Schließrichtung beaufschlagte Kupplung 41 und eine anschließende Welle 42 mit dem Lenkhandrad 9 mechanisch verbunden ist. Die Kupplung 41 kann durch einen Stellmotor 43 gegen die Kraft ihrer Schließfederung geöffnet werden, um den mechanischen Durchtrieb zwischen gelenkten Fahrzeugrädern und Lenkhandrad 9 aufzutrennen. Die Welle 42 ist des weiteren mit dem selbsthemmungsfreien Elektromotor 10 antriebsmäßig (selbsthemmungsfrei) verbunden. Zwischen dem Lenkhandrad 9 und der Welle 42 sowie dem Elektromotor 10 und der Welle 42 sind jeweils Drehmomentsensoren 44 und 45 angeordnet.

Das Ritzel 40 ist mit dem als Winkelsensor ausgebildeten Geber 25 zur Ermittlung des Lenkwinkel-Istwertes verbunden. Die Welle 42 ist am Lenkhandrad 9 mit dem ebenfalls als Winkelsensor ausgebildeten Geber 26 verbunden, der beim Normalbetrieb als Lenkwinkel-Sollwertgeber dient.

Im übrigen bildet die Stange 3 wiederum die Kolbenstange des Kolben-Zylinder-Aggregates 5, welches wiederum gemäß der Anordnung nach Fig. 1 oder 2 betätigt werden kann.

Bei Normalbetrieb wird der Stellmotor 43 der Kupplung 41 von der Regel- und Steueranordnung 24 ständig erregt, derart, daß er die Kupplung 41 gegen die Kraft ihrer Schließfederung offenhält. Darüber hinaus betätigt die Regel- und Steueranordnung 24 das Kolben-Zylinder-Aggregat 5 bzw. die dieses Aggregat 5 steuernden Elemente derart, daß durch die vom Aggregat 5 erzeugten Stellkräfte eine eventuelle Differenz zwischen dem vom Geber 26 gelieferten Lenkwinkel-Sollwert und dem vom Geber 25 gelieferten Lenkwinkel-Istwert ausgeregelt wird. Hierzu wird auf die Ausführungen zu den Fig. 1 und 2 verwiesen.

Bei eventuellen Systemstörungen wird der Stellmotor 43 von der Regel- und Steueranordnung 24 abgeschaltet, so daß die Kupplung 41 schließt und Lenkhandrad 9 und gelenkte Fahrzeugräder 1 miteinander zwangsgekoppelt sind.

Auch im Beispiel der Fig. 3 tritt zwischen Lenkhandrad 9 und gelenkten Fahrzeugrädern 1 bei eingeschalteter Zwangskopplung eine mehr oder weniger große elastische Nachgiebigkeit auf, die insbesondere auf der Torsionselastizität der Wellenteilen zwischen Ritzel 40 und Lenkhandrad 9 beruht. Damit kann die Steuer- und Regelanordnung 24 wiederum aus den Signalen der Sensoren 25 und 26 die zwischen Lenkhandrad 9 und gelenkten Fahrzeugrädern 1 übertragenen Kräfte und Momente ermitteln und in Abhängigkeit davon die Stellkraft des Lenkstellantriebes, im Falle der Fig. 3 ein Kolben-Zylinder-Aggregat 5, steuern.

Abweichend von den zeichnerisch dargestellten Ausführungsformen können die Drehmoment-Sensoren 27 und 44 auch lenkhandradseitig des Aggregates 8 bzw. der Pumpe 31 bzw. der Antriebsverbindung zwischen Motor 10 und Welle 42 angeordnet sein.

Sollte beim Einschalten des Nofallbetriebes, d.h. beim Wirksamwerden der Zwangskopplung zwischen Lenkhandrad 9 und gelenkten Fahrzeugrädern 1 der Elektromotor 10 noch ein Drehmoment erzeugen, kann dessen Einfluß auf die Signaldifferenz zwischen den Signalen der Winkelsensoren 25 und 26 rechnerischl kompensiert werden, so daß im Ergebnis allein die durch Handkräfte bewirkte Signaldifferenz zwischen den Sensoren 25 und 26 zur Steuerung einer mit dem Aggregat 5 und/oder mit dem Elektromotor 10 erzeugten Servokraft herangezogen wird. Für diese rechnerische Kompensation können z.B. gespeicherte Erfahrungswerte für die Abhängigkeit der vorgenannten Signaldifferenz von den zwischen Lenkhandrad 9 und gelenkten Fahrzeugrädern 1 wirksamen Kräften und Momenten berücksichtigt werden.

## Patentansprüche

1. Lenksystem für nicht spurgebundene Kraftfahrzeuge, mit
- einer vom Fahrer betätigten Lenkhandhabe (9), z.B. Lenkhandrad,
- einem Lenkstellantrieb (5) zur Lenkverstellung lenkbarer Fahrzeugräder,
- einem mit der Lenkhandhabe betätigbaren Lenkwinkel-Sollwertgeber (26),
- einem mit den lenkbaren Fahrzeugrädern betätigbaren Lenkwinkel-Istwertgeber (25),
- einer den Lenkstellantrieb (5) in Abhängigkeit von einem Vergleich der Soll- und Istwerte des Lenkwinkels steuernden und sich sowie mit ihr zusammenwirkende Sensorik ständig auf Fehlfunktion überprüfenden Regelanordnung und
- einer zwischen der Lenkhandhabe (9) und den lenkbaren Fahrzeugrädern (1) angeordneten mechanischen oder hydraulischen Zwangskopplung, welche einen unwirksamen Normalzustand, bei dem sie bei korrekt arbeitender Regelanordnung geöffnet wird bzw. offen bleibt, und einen wicksamen Sonderzustand, bei dem sie bei fehlerhafter Regelanordnung automatisch geschlossen wird, aufweist,
wobei die wirksam geschaltete Zwangskopplung eine vorgegebene Elastizität aufweist und bei wirksamer Zwangskopplung zwischen Lenkhandhabe (9) und gelenkten Fahrzeugrädern (1) übertragbare Kräfte und Momente eine Relativverstellung zwischen Soll- und Istwertgeber (25,26) verursachen, **dadurch gekennzeichnet, daß** das Lenksystem im Sonderzustand bei hinreichender Restfunktion von Regelanordnung (24) und Sensorik (25,26) als Servolenkung arbeitet, indem die Regelanordnung (24) den Lenkstellantrieb (5,33) analog zu Betrag und Richtung der aus den Signalen von Soll- und Istwertgeber (25,26) erfaßbaren Relativverstellung zur Erzeugung einer Servokraft mit einer die übertragenen Kräfte bzw. Momente vermindernden Richtung steuert.

2. Lenksystem nach Anspruch 1,
**dadurch gekennzeichnet,**
**daß** die Regelanordnung (24) die relativen Stellungen bzw. Signale von Soll- und Istwertgeber (25,26) unmittelbar beim Einschalten der Zwangskopplung registriert und nachfolgend zu jedem Signal des Sollwertgebers (26) unter Berücksichtigung der konstruktiv vorgegebenen Übersetzung zwischen den Stellhüben von Lenkhandhabe (9) und gelenkten Fahrzeugrädern (1) ein zu erwartendes Signal des Istwertgebers (25) ermittelt und den Lenkstellantrieb (5) in Abhängigkeit von einer Differenz zwischen dem tatsächlichen und dem erwarteten Signal des Istwertgebers (25) steuert, solange die Zwangskopplung eingeschaltet bleibt.

3. Lenksystem nach Anspruch 1 oder 2,
**dadurch gekennzeichnet,**
**daß** zwischen Lenkhandhabe (9) und gelenkten Fahrzeugrädern (1) eine hydraulische Zwangskopplung (Fig. 1 und 2) vorgesehen ist.

4. Lenksystem nach Anspruch 1 oder 2,
**dadurch gekennzeichnet,**
**daß** zwischen Lenkhandhabe (9) und gelenkten Fahrzeugrädern (1) eine mechanische Zwangskopplung (Fig. 3) vorgesehen ist.

## Claims

1. Steering system for non-tracked motor vehicles, comprising
- a steering handle (9) operated by the driver, for example a steering hand wheel,
- a steering adjusting drive (5) for steering adjustment of steerable vehicle wheels,
- a steering angle desired value sensor (26) which can be operated by the steering handle,
- a steering angle actual value sensor (25) which can be operated by the steerable vehicle wheels,
- a control system controlling the steering adjusting drive (5) as a function of a comparison of desired and actual values of the steering angle and continuously monitoring itself and a sensor system associated with it for malfunctioning, and
- a mechanical or hydraulic forced coupling arranged between the steering handle (9) and the steerable vehicle wheels (1), the coupling having an inoperative normal state in which it is opened or remains open when the control arrangement is working correctly and has an operative special state in which it is automatically closed when the control system is malfunctioning,
wherein the operatively connected forced coupling has a predetermined elasticity and when the forced coupling is operative, forces and torques which can be transmitted between the steering hand wheel (9) and steered vehicle wheels (1) cause a relative adjustment between the desired and actual sensors (25, 26), **characterised in that**, in the special state, with a sufficient residual function of the control arrangement (24) and sensor system (25, 26), the steering system works as power-assisted steering, the control arrangement (24) controlling the steering adjusting drive (5, 33) in accordance with an amount and direction of the relative adjustment which can be detected from the signals from the desired and actual value sensors (25, 26) to generate a power-assisted force with a direction reducing the transmitted forces or torques.

2. Steering system according to claim 1, **characterised in that** the control arrangement (24) registers the relative positions or signals of the desired and actual value sensors (25, 26) directly during switching on of the force coupling and then determines a signal to be expected of the actual value sensor (25) for each signal of the desired value sensor (26), taking into account the constructively defined ratio between the adjusting strokes of the steering handle (9) and steered vehicle wheels (1), and controls the steering adjusting drive (5) as a function of a difference between the actual and the expected signal of the actual value sensor (25), as long as the forced coupling remains switched on.

3. Steering system according to claim 1 or 2, **characterised in that** a hydraulic forced coupling (Fig. 1 and 2) is provided between the steering handle (9) and steered vehicle wheels (1).

4. Steering system according to claim 1 or 2, **characterised in that** a mechanical forced coupling (Fig. 3) is provided between the steering handle (9) and steered vehicle wheels (1).

## Revendications

1. Système de direction pour automobiles non guidées, comportant les éléments suivants
- une manette de direction (9) actionnée par le conducteur, par exemple un volant de direction,
- un mécanisme de commande de direction (5) pour le réglage de direction de roues de véhicule dirigeables,
- un ajusteur de valeur de consigne d'angle de direction (26) pouvant être actionné avec la manette de direction,
- un ajusteur de valeur réelle d'angle de direction (25) pouvant être actionné avec les roues de véhicule dirigeables,
- un dispositif de régulation qui contrôle le mécanisme de commande de direction (5) en fonction d'une comparaison des valeurs de consigne et des valeurs réelles de l'angle de direction et se contrôle constamment au niveau d'une fonction défectueuse ainsi qu'avec des capteurs coopérant avec le dispositif èt
- un couplage forcé mécanique ou hydraulique, disposé entre la manette de volant (9) ou les roues du véhicule dirigeables (1), qui présente un état normal inefficace, dans lequel il est ouvert ou reste ouvert avec un dispositif de régulation travaillant correctement, et un état spécial efficace, dans lequel il est fermé automatiquement dans le cas d'un dispositif de régulation défectueux,
le couplage forcé commuté de façon efficace présentant une élasticité prédéfinie et des forces et des couples transmissibles entre la manette de direction (9) et des roues de véhicule (1) guidées dans le cas d'un couplage forcé efficace présentant un déplacement relatif entre l'ajusteur de valeur de consigne et l'ajusteur de valeur réelle (25, 26), **caractérisé en ce que** le système de direction travaille comme une direction assistée dans l'état spécial dans le cas d'une fonction résiduelle suffisante du dispositif de régulation (24) et des capteurs (25, 26), du fait que le dispositif de régulation (24) contrôle le mécanisme de commande de direction (5,33) de la même façon que la valeur et la direction du déplacement relatif pouvant être enregistré à partir des signaux du capteur de valeur de consigne et du capteur de valeur réelle (25, 26) pour générer une force assistée avec une direction qui réduit les forces et couples transmis.

2. Système de direction selon la revendication 1, **caractérisé en ce que**
le dispositif de régulation (24) enregistre les positions relatives et les signaux provenant de l'ajusteur de valeur de consigne et de l'ajusteur de valeur réelle (25, 26) directement lors de la mise en route du couplage forcé et détermine ensuite un signal à attendre de l'ajusteur de valeur réelle (25) pour chaque signal de l'ajusteur de valeur de consigne (26) en tenant compte de la transmission prédéfinie par la construction entre les courses de réglage de la manette de direction (9) et des roues de véhicule (1) guidées et contrôle le mécanisme de commande de direction (5) en fonction d'une différence entre le signal réel et le signal attendu de l'ajusteur de valeur réelle (25) aussi longtemps que le guidage forcé reste enclenché.

3. Système de direction selon la revendication 1 ou 2, **caractérisé en ce**
**qu'**il est prévu un couplage forcé (figures 1 et 2) hydraulique entre la manette de direction (9) et des roues de véhicule guidées (1).

4. Système de direction selon la revendication 1 ou 2, **caractérisé**
**en ce qu'**un couplage forcé (figure 3) mécanique est prévu entre la manette de direction (9) et les roues de véhicule (1) guidées.
